# EUROPÄISCHE PATENTSCHRIFT

(11) **EP 2 500 578 B1**
(45) Veröffentlichungstag und Bekanntmachung des Hinweises auf die Patenterteilung: **13.06.2018**
(21) Anmeldenummer: 11002074.0
(22) Anmeldetag: 12.03.2011
(51) Int. Cl.: F04D 13/06, H02K 5/00

(54) **Heizungsumwälzpumpe**
Heat circulation pump
Pompe de recirculation de chauffage

(43) Veröffentlichungstag der Anmeldung: 19.09.2012
(73) Patentinhaber: Grundfos Management a/s, 8850 Bjerringbro (DK)
(72) Erfinder: Stentoft, Mikkel Rind, 8900 Randers (DK)
(74) Vertreter: Vollmann, Heiko

(56) Entgegenhaltungen:
- EP-A1- 1 460 748
- FR-A- 1 532 766
- JP-A- 2007 309 242
- US-A- 3 545 889

## Beschreibung

Die Erfindung betrifft eine Heizungsumwälzpumpe mit den im Oberbegriff des Anspruchs 1 angegebenen Merkmalen. Eine solche Heizungsumwälzpumpe ist z.B. aus der JP 2007309242 bekannt.

Grundsätzlich ähnliche Heizungsumwälzpumpen zählen zum Stand der Technik. Sie weisen typischerweise ein Pumpengehäuse mit einem Saug- und einem Druckstutzen sowie ein darin angeordnetes Pumpenlaufrad auf. Zum Antrieb des Pumpenlaufrads ist ein Elektromotor vorgesehen, dessen Welle das Pumpenlaufrad trägt. Der den Rotor umgebende Stator ist in einem Gehäuse angeordnet, welches an seiner zum Pumpengehäuse weisenden Seite einen Flansch oder dergleichen Anschlusselement aufweist, über den das Motor-, insbesondere das Statorgehäuse mit dem Pumpengehäuse verbunden ist. Zum elektrischen Anschluss des Motors ist ein Klemmenkastengehäuse vorgesehen, welches an der vom Pumpengehäuse abgewandten Axialseite des Statorgehäuses angeordnet ist und den unteren Teil des Klemmenkastens bildet. Das Klemmenkastengehäuse umfasst typischerweise auch die Motorelektronik, also beispielsweise einen Frequenzumrichter. Eine Heizungspumpe der vorgenannten Art ist beispielsweise aus DE 10 2004 030 721 B3 bekannt.

Eine ähnliche Heizungsumwälzpumpe ist aus der EP 1 460 748 bekannt.

Derartige Heizungsumwälzpumpen kleiner und mittlerer Bauart werden in Großserien hergestellt, weshalb auch kleinste Verbesserungen schon große Einsparungen bei Fertigung und/oder Montage bedeuten können. Es ist ein stetes Bestreben diese Pumpen einerseits technisch weiter zu verbessern und noch zuverlässiger zu gestalten andererseits die Herstellungs- und Montagekosten zu senken.

Diese Aufgabe wird gemäß der Erfindung durch eine Heizungsumwälzpumpe mit den in Anspruch 1 angegebenen Merkmalen gelöst. Vorteilhafte Ausgestaltungen der Erfindung sind in den Unteransprüchen der nachfolgenden Beschreibung und der Zeichnung angegeben.

Die erfindungsgemäße Heizungsumwälzpumpe weist die Merkmale des Anspruchs 1 auf.

Grundgedanke der erfindungsgemäßen Lösung ist es somit, ein Klemmenkastengehäuse vorzusehen, das nicht nur den eigentlichen Klemmenkasten oder einen wesentlichen Teil davon bildet, sondern darüber hinaus auch noch das Statorgehäuse großteils oder vollständig übergreift.

Das Pumpengehäuse bzw. das den Stator umgreifende Teil des Pumpengehäuses, das Statorgehäuse, müssen nicht notwendigerweise ein gesondertes Bauteil, beispielsweise ein Metallgussteil sein, sondern können auch in Form eines Vergusskörpers einstückig mit der Motorwicklung ausgebildet sein, wie dies bei in Kunststoff einbetteten Statorwicklungen an sich bekannt ist.

Wenn im Folgenden beispielhaft von einem Flansch die Rede ist, so steht dies für beliebige Anschlusselemente, wie beispielsweise einen Überwurf oder andere geeignete Anschlüsse, wie sie zur Verbindung mit der Pumpe bekannt sind.

Mit im Bereich des Flansches im Sinne der Erfindung ist gemeint, dass das Statorgehäuse entweder vollständig, d. h. einschließlich des Flansches vom Klemmenkastengehäuse übergriffen ist oder dass das Klemmenkastengehäuse im Bereich des Flansches endet oder dass das Klemmenkastengehäuse am oder kurz vor dem Flansch endet. Letzteres kann beispielsweise zweckmäßig sein, damit die Schraubköpfe der Schrauben, welche das Pumpengehäuse mit dem Flansch verbinden, motorseitig noch zugänglich sind oder wenn beispielsweise unmittelbar im Flanschbereich das Motorgehäuse mechanisch verstärkt ausgebildet ist.

Die erfindungsgemäße Lösung weist zahlreiche Vorteile auf: Soweit das Statorgehäuse von dem Klemmenkastengehäuse übergriffen ist, ist dieses bei geeigneter Ausgestaltung des Klemmenkastengehäuses in diesem weder zugänglich noch sichtbar. So braucht das Statorgehäuse in diesem Bereich nicht bearbeitet zu werden, d. h. insbesondere bei einem metallischen Gussgehäuse beispielsweise nicht lackiert zu werden. Weiterhin bildet diese Ausgestaltung die Möglichkeit, unabhängig von der Statorgröße, d. h. unabhängig von der Länge und den Durchmesser des Stators, eine einheitliche zylindrische, konische oder anderweitig geometrisch gestaltete Außenform der Pumpe im Bereich von Motor und Klemmenkasten zu realisieren. Hierdurch kann nicht nur ein besonders ansprechendes Design erzielt werden, sondern es besteht darüber hinaus die Möglichkeit für Statorgehäuse unterschiedlicher Größe bei geeigneter Ausgestaltung des Klemmenkastengehäuses mit gleichem Klemmenkastengehäuse auszustatten, so dass zum einen die Teilevielfalt reduziert wird und zum anderen Pumpen unterschiedlicher Leistung in ihren äußeren Abmessungen übereinstimmen, was insbesondere auch bei Verpackung und Lagerung Vorteile mit sich bringt.

Gemäß einer vorteilhaften Ausgestaltung der Erfindung ist das Klemmenkastengehäuse so ausgestaltet, dass es das Statorgehäuse bis zum Flansch übergreift, also bis unmittelbar an den Flansch heranreicht. Alternativ ist gemäß der Erfindung vorgesehen, das Klemmenkastengehäuse so auszubilden, dass es sowohl das Statorgehäuse als auch den Flansch übergreift. Diese Ausbildung hat den Vorteil, dass weder Statorgehäuse noch Flansch außenseitig zu bearbeiten, insbesondere zu lackieren sind. Auch können die Oberflächen vergleichsweise grob strukturiert bleiben ohne dass dies Einfluss auf die Qualitätsanmutung der Pumpe hat, da in diesem Bereich dann nur das Klemmenkastengehäuse sichtbar und manuell erreichbar ist.

Vorteilhaft ist die erfindungsgemäße Heizungsumwälzpumpe als Nassläufer ausgebildet, d. h. sie weist einen Nasslaufmotor auf, bei dem der Rotor des Motors in einem typischerweise mit Förderflüssigkeit gefüllten Spaltrohr läuft. Insbesondere bei dieser Motorbauart ist es zweckmäßig, das Klemmenkastengehäuse so auszulegen, dass es einen Klemmenkasten mit dicht geschlossenem Boden bildet, der vorzugsweise zu dem noch axial vom Statorgehäuse beabstandet ist. Die Beabstandung des Bodens vom Statorgehäuse bewirkt insbesondere eine thermische Entkopplung, sie bewirkt darüber hinaus aber auch, dass weniger Schwingungen vom Motor auf den Klemmenkasten übertragen werden. Durch die dichte Ausgestaltung des Klemmenkastenbodens ist sichergestellt, dass keine Förderflüssigkeit vom Motor her in den Klemmenkasten gelangen kann, wie dies beispielsweise bei Undichtigkeiten im Bereich von Motor/Pumpe sonst erfolgen könnte. Insbesondere bei nur geringfügigen Undichtigkeiten oder Kondenswasserbildung verhindert diese Anordnung zuverlässig ein Eindringen von Feuchtigkeit in den Klemmenkasten und die ggfs. darin befindliche empfindliche Elektronik.

Zur anderen Seite, nämlich zu der vom Statorgehäuse abgewandten Axialseite, ist das Klemmenkastengehäuse vorteilhaft mittels eines Deckels dichtend, d. h. beispielsweise unter Eingliederung einer Dichtung abgeschlossen. Es ergibt sich somit ein vollständig dichter Klemmenkasten, dessen Inneres zuverlässig vor Eindringen von Flüssigkeit geschützt ist. Weiterhin ist gemäß der Erfindung das Klemmenkastengehäuse kappenförmig und zum Statorgehäuse hin offen ausgebildet. Eine solche Konstruktion ist insbesondere dann sinnvoll, wenn das Statorgehäuse an seinem freien axialen Ende offen ausgestaltet ist. Es kann mit einem kappenförmigen Klemmenkastengehäuse des Klemmenkastens selbst gebildet werden, der dann zum Stator hin offen ist, sowie eine das Statorgehäuse übergreifende Verkleidung, wobei durch eine ringförmige Dichtung, beispielsweise einen O-Ring zwischen dem übergreifenden Teil des Klemmenkastengehäuses und dem Statorgehäuse ein dichter Abschluss des Klemmenkastens bzw. des Motors zur Außenumgebung gewährleistet werden kann.

Um das Klemmenkastengehäuse am Statorgehäuse zu befestigen, ist gemäß der Erfindung mindestens eine Schnappverbindung zwischen Klemmenkastengehäuse und Statorgehäuse und/oder zwischen Klemmenkastengehäuse und Flansch vorgesehen. Eine solche Schnappverbindung ist fertigungstechnisch besonders vorteilhaft, da dass Klemmenkastengehäuse durch einfaches kräftiges Aufsetzen auf das Statorgehäuse und/oder den Flansch befestigt werden kann. Dabei ist die Schnappverbindung oder sind die Schnappverbindungen vorteilhaft so ausgestaltet, dass sie unlösbar sind oder zumindest schwer lösbar sind. Eine solche Anordnung hat weiter den Vorteil, dass sichergestellt ist, dass nicht sachkundige Dritte das Klemmenkastengehäuse nicht entfernen können und damit auch nicht an spannungsführende Teile des Motors oder der Motorelektronik herankommen können. Gemäß der Erfindung ist eine Schnappverbindung durch mindestens einen Schnappvorsprung und eine entsprechend dazu angeordnete Schnappausnehmung vorgesehen, und zwar im Bereich zwischen der Umfangsfläche des Statorgehäuses und dem übergreifenden Teil des Klemmenkastengehäuses. Dabei ist unter Schnappausnehmung im Sinne der Erfindung nicht notwendigerweise ein Durchbruch zu verstehen, es genügt hier eine Vertiefung, eine hintergreifbare Kante oder dergleichen, in welche der Schnappvorsprung nach elastischem Auslenken eingreift. Ein oder mehrere solcher Schnappverbindungen zwischen dem Statorgehäuse und dem übergreifenden Teil des Klemmenkastengehäuses sind besonders vorteilhaft, da in diesem Bereich großflächige Schnappvorsprünge und Schnappausnehmungen angeordnet werden können, da dieser Bereich im Übrigen im Wesentlichen ungenutzt ist. Darüber hinaus können großflächige Schnappverbindungen auch vergleichsweise große Kräfte übertragen, d. h. einen großen Widerstand gegen ein ungewünschtes Lösen bilden.

Gemäß einer vorteilhaften Weiterbildung der Erfindung ist eine Schnappverbindung vorgesehen, die mindestens einen Schnappvorsprung und eine entsprechend dazu angeordnete Schnappausnehmung im Bereich zwischen dem Boden des Klemmenkastens und der Axialseite des Statorgehäuses aufweist. Dabei können gemäß der Erfindung radial und axial angreifende Schnappverbindungen auch in Kombination genutzt werden. Die Anordnung einer Schnappverbindung im Axialbereich ist insbesondere in Kombination mit einem dort befindlichen Stecker zur elektrischen Verbindung der im Klemmenkasten befindlichen Anschlussklemmen und ggf. Motorelektronik mit der Motorwicklung von Vorteil.

Konstruktiv besonders einfach ist es, wenn die Schnappverbindung einen oder vorzugsweise zwei oder mehr am Flansch angreifende Schnappvorsprünge am Klemmenkastengehäuse aufweist. Der Flansch hierzu bedarf keiner oder nur geringer Modifikation. Entweder hintergreifen die Schnappvorsprünge den Flansch dort, wo auch ein ausreichender Freiraum gegenüber dem Pumpengehäuse gebildet ist, oder aber es sind am Flansch entsprechende Freiräume oder Schnappausnehmungen vorgesehen. Da gemäß der Erfindung Schnappvorsprünge in dem Bereich des Klemmenkastengehäuses angeformt sind, in dem dieser das Statorgehäuse übergreift, kann gemäß einer vorteilhaften Weiterbildung der Erfindung im Bereich eines solchen Schnappvorsprungs eine Materialschwächung vorgesehen sein, um den Schnappvorsprung in diesem Bereich das erforderliche Ausweichvermögen zu geben um beim Montieren ausweichen zu können. Eine solche Materialschwächung kann in einfacher Weise durch eine schlitzförmige Ausnehmung gebildet sein. Eine solche schlitzförmige Ausnehmung kann beispielsweise in dem übergreifenden Teil des Klemmenkastens durch längsverlaufende, also achsparallele Schlitze zwischen über den Umfang verteilten Schnappvorsprüngen gebildet sein oder aber auch durch radial verlaufende Schlitze, in unmittelbarer Nachbarschaft zu den jeweiligen Schnappvorsprüngen.

Wenn, was vorteilhaft ist, der Boden des Klemmenkastens geschlossen ausgebildet ist, dann sind zumindest elektrische Kontakte hindurchzuführen. Vorteilhaft ist dann die Kontaktdurchführung zum Motor hin nach Art eines Steckers einer elektrischen Steckverbindung ausgebildet, wobei im Statorgehäuse eine Muffe dieser Steckverbindung ausgebildet ist. Bei einer solchen Anordnung kann das Klemmenkastengehäuse nicht nur praktisch mit einem Griff mechanisch am Statorgehäuse befestigt werden, sondern es wird dabei gleichzeitig die elektrische Steckverbindung geschlossen, indem Stecker und Muffe bestimmungsgemäß ineinander geführt werden. Bei einer solchen Anordnung ist es besonders vorteilhaft, eine Schnappverbindung im Bereich zwischen Stecker und Muffe vorzusehen, um die elektrische Steckverbindung möglichst kontaktnah zu sichern. Hierzu ist zweckmäßigerweise am Stecker ein z. B. keilförmiger Schnappvorsprung vorgesehen, der in eine Schnappausnehmung in der axialen Stirnwand des Statorgehäuses eingreift, die Teil der Muffe bildet.

Die erfindungsgemäße Heizungsumwälzpumpe weist vorteilhaft ein Klemmenkastengehäuse auf, das als Kunststoffspritzgussteil ausgebildet ist. Dann ist es zweckmäßig, das Klemmenkastengehäuse in den das Statorgehäuse übergreifenden Bereich zur Pumpe hin aufweitend auszubilden, also beispielsweise mit einer leicht konischen Form zu versehen. Eine solche Form ist nicht nur optisch ansprechend sondern darüber hinaus werkzeugtechnisch besonders günstig, da sie aus dem Werkzeug leicht zu entformen ist. Derartige Kunststoffspritzgussteile sind insbesondere in der Großserienfertigung kostengünstig in der Herstellung. Das Statorgehäuse besteht typischerweise aus Metall und ist als Gussgehäuse ausgebildet, kann jedoch auch aus anderem geeigneten Werkstoff gebildet sein.

Wenn, was gemäß einer Ausbildung der Erfindung vorgesehen sein kann, das Klemmenkastengehäuse nicht nur das Statorgehäuse, sondern auch den Flansch übergreift, dann weist dieses zweckmäßigerweise fluchtend zu den Ausnehmungen im Flansch ebenfalls Ausnehmungen auf, durch welche die Bolzen, insbesondere Schrauben geführt sind, welche den Flansch am Statorgehäuse mit einem Flansch am Pumpengehäuse bzw. mit dem Pumpengehäuse verbinden. Bei einer solchen Ausführung kann es zweckmäßig sein, das Klemmenkastengehäuse auch im Umgebungsbereich der Ausnehmungen auszusparen, damit Schraubköpfe oder Muttern in diesem Bereich ausreichend Freiraum haben bzw. dieser Bereich mit einem Werkzeug zugänglich ist.

Die Erfindung ist nachfolgend anhand eines in der Zeichnung dargestellten Ausführungsbeispiels im Einzelnen erläutert. Es zeigen:

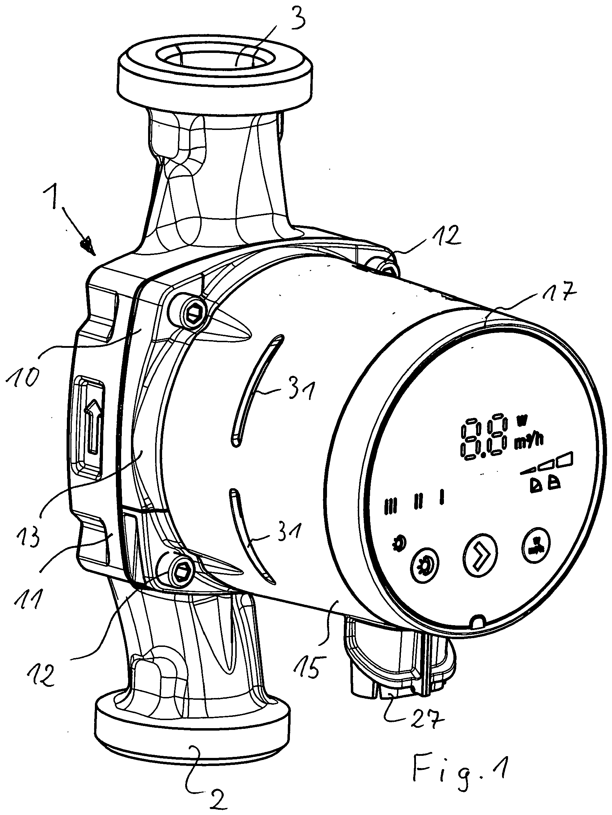

- Fig. 1: eine erfindungsgemäße Heizungsumwälzpumpe in vereinfachter schematischer perspektivischer Darstellung,

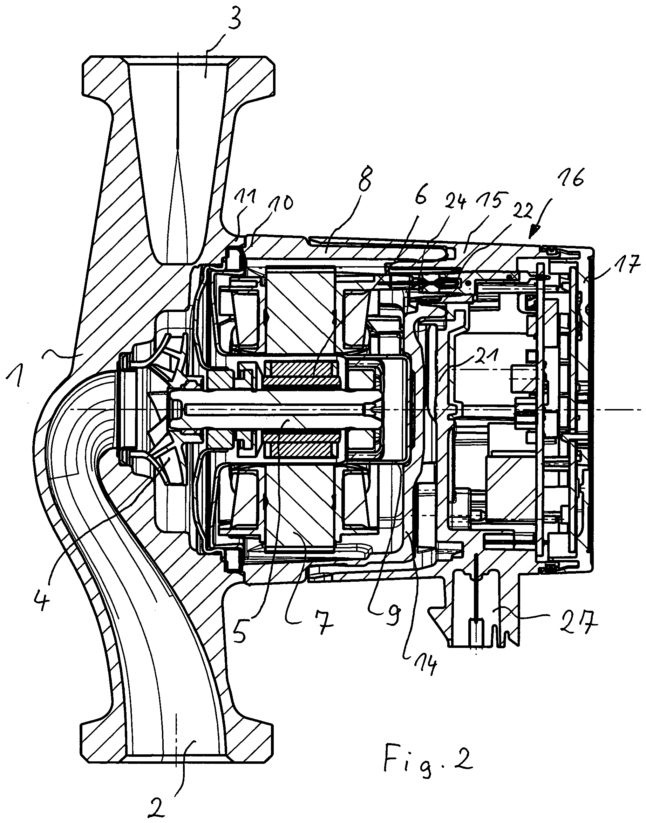

- Fig. 2: einen Längsschnitt durch die Pumpe gemäß Figur 1,
- Fig. 3: eine perspektivische Ansicht auf die Pumpe gemäß Figur 1 mit abgenommenem Klemmenkastengehäuse und
- Fig. 4: eine Ansicht auf das Klemmenkastengehäuse von der Motorseite aus.

Die anhand der Figuren dargestellte Heizungsumwälzpumpe weist ein Pumpengehäuse 1 mit einem Saugkanal 2 und einem Druckkanal 3 auf. In dem Pumpengehäuse 1 ist ein Pumpenlaufrad 4 drehbar angeordnet um in an sich bekannter Weise Förderflüssigkeit vom Saugkanal 2 in den Druckkanal 3 durch Rotation des Pumpenlaufrads 4 druckerhöhend zu fördern. Das Pumpenlaufrad 4 sitzt auf einer Welle 5, die zugleich einen Rotor 6 eines Elektromotors trägt, dessen Stator 7 in einem Statorgehäuse 8 angeordnet ist. Der Elektromotor ist als Nasslaufmotor ausgelegt und weist ein Spaltrohr 9 zwischen Rotor 6 und Stator 7 auf, das flüssigkeitsgefüllt ist.

Das Pumpengehäuse 1 ist zum Statorgehäuse 8 hin offen ausgebildet. Das Statorgehäuse 8 weist an seinem pumpenseitigen Ende einen Flansch 10 auf, der an einen Flansch 11 des Pumpengehäuses 1 anschließt und eine abgerundete quadratische Kontur hat. Da das übrige Statorgehäuse 8 rund ausgebildet ist, ergeben sich Abschnitte, in denen der Flansch 10 seitlich über das übrige Statorgehäuse 8 hervorspringt und mit Ausdehnungen versehen ist. In diesen Ausnehmungen sind Schrauben 12 geführt, mit denen der motorseitge Flansch 10 am pumpenseitigen Flansch 11 befestig ist.

Der Flansch 10 ist durch einen ringförmigen Abschnitt 13 verstärkt, der jedoch im Bereich der Ecken ausgenommen ist, um hier den ausreichenden Freiraum für die Köpfe der Schrauben 12 zu geben. Im Übrigen erstreckt sich das Statorgehäuse 8 vom Flansch 10 mit seinem ringförmigen verstärkenden Abschnitt 13 etwa zylinderförmig parallel zur Drehachse der Welle 5 mit Abstand zum Spaltrohr 9 unter Einschluss des Stators 7 von der Pumpe weg. Abgeschlossen wird das Statorgehäuse 8 an der vom Pumpengehäuse 1 abgewandten Axialseite durch eine Stirnwand 14. Pumpengehäuse 1 und Statorgehäuse 8 bestehen aus Metallguss.

Ein Klemmenkastengehäuse 15 ist aus Kunststoff gebildet und weist einen Klemmenkasten 16 auf, der sich an der vom Pumpengehäuse 1 abgewandten Stirnseite des Statorgehäuses 8 in Richtung der Drehachse des Pumpenlaufrads 4 erstreckt und der endseitig durch einen Deckel 17 unter Eingliederung einer Dichtung abgeschlossen ist. Das Klemmenkastengehäuse 15 bildet jedoch nicht nur den Klemmenkasten 16 sondern übergreift den pumpenfernen Teil des Statorgehäuses 8 an seiner Axialseite und umfänglich bis hin zum Flansch 10 bzw. dessen ringförmigen Verstärkungsabschnitt 13. In dem das Statorgehäuse 8 umgreifenden Bereich ist das Klemmenkastengehäuse 15 im Wesentlichen zylindrisch ausgebildet, läuft jedoch zur Pumpe hin leicht aufgeweitet aus, umschließt das Statorgehäuse 8 vollständig und endet bündig an dem ringförmigen Abschnitt 13 des Flansches 10. Der das Statorgehäuse 8 übergreifende Teil des Klemmenkastengehäuses 15 bildet in dem übergreifenden Bereich jedoch nicht nur eine Verkleidung des Statorgehäuses 8 sondern auch Teil der Befestigung dieses Bauteils am Statorgehäuse 8.

Das Klemmenkastengehäuse 15 ist durch Schnappverbindungen mit dem Statorgehäuse 8 verbunden und wird von der pumpenfernen Axialseite des Statorgehäuses 8 auf dieses aufgeschoben. Hierzu sind an der Innenseite des das Statorgehäuse 8 überragenden Teils des Klemmenkastengehäuses 15 zwei um 120° zueinander versetzt angeordnete Schnappvorsprünge 18 vorgesehen, die im Querschnitt etwa keilförmig sind, so dass diese beim Aufschieben auf das Statorgehäuse 8 zunächst radial nach außen ausweichen, um dann durch die elastische Rückstellkraft des Materials in entsprechend am Statorgehäuse 8 außenseitig vorgesehene Schnappausnehmungen 19 einzuschnappen.

Während die Schnappvorsprünge 18 am Außenumfang des Statorgehäuses 8 eingreifen, ist ein weiterer Schnappvorsprung 20 an einem im Boden 21 des Klemmenkastens 16 angeformten Steckers 22 vorgesehen, der zu den beiden Schnappvorsprüngen 18 ebenfalls um 120° versetzt angeordnet ist und in einer Ausnehmung 23 der Stirnwand 14 des Statorgehäuses 8 einschnappt und dort eingreift. Das Klemmenkastengehäuse 15 ist in dieser Ausführungsform also mit drei Schnappverbindungen befestigt, die um 120° versetzt, bezogen auf den Umfang, angeordnet sind, von denen zwei umfänglich wirksam sind und der Dritte axial greift.

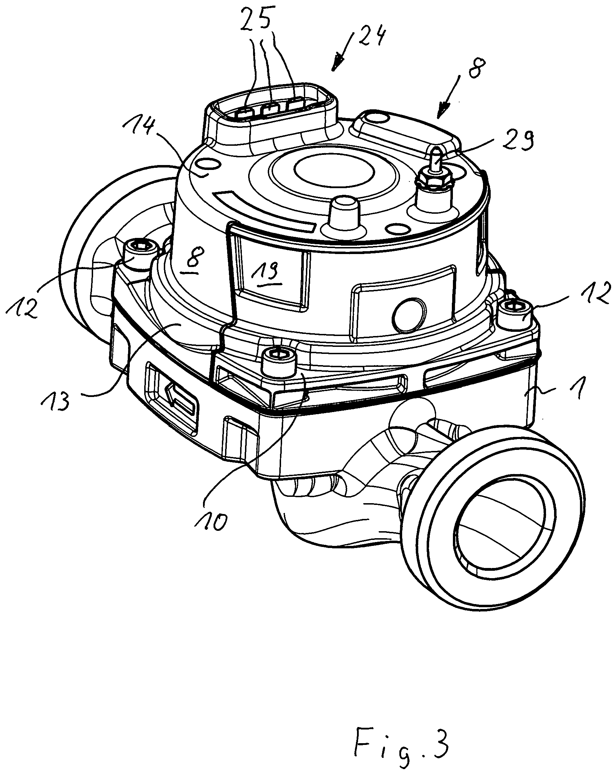

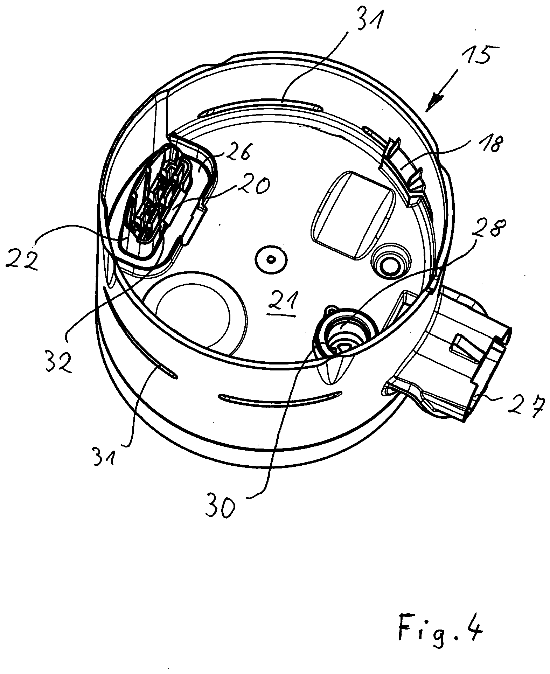

Das Statorgehäuse 8 ist im Bereich der elektrischen Verbindung als Muffe 24 ausgebildet, die den Stecker 22 rastend aufnimmt. In den Figuren 3 und 4 sind drei elektrische Kontakte 25 dargestellt, die durch diese Steckverbindung elektrisch leitend miteinander verbunden werden. Dadurch, dass an dem Stecker 22 ein Schnappvorsprung angeformt ist, wird insbesondere diese elektrische Steckverbindung gesondert gesichert, wobei diese Schnappverbindung gleichzeitig auch zur Befestigung des Klemmenkastengehäuses 15 auf dem Statorgehäuse 8 dient.

Die elektrischen Kontakte 25 des Steckers 22 sind in den Boden 21 des Klemmenkastens eingeformt und somit gegenüber dem umgebenden Kunststoffmaterial auch abgedichtet. Zusätzlich ist die Kontakte 25 umgebend eine umlaufende Dichtung 26 vorgesehen, welche zusätzlich zur Abdichtung zwischen der Muffe 24 des Statorgehäuses 8 und dem Boden 21 des Klemmenkastens 16 sorgt. Die im Klemmenkasten 16 befindliche Motorelektronik, die nicht Gegenstand der vorliegenden Erfindung ist, ist hier nicht im Einzelnen dargestellt und beschrieben. Die elektrische Anschlussleitung kann über einen seitlich, also radial am Klemmenkasten 16 angeformten Muffe 27 angeschlossen werden, in die ein genormter Anschlussstecker einsetzbar ist.

Im Boden 21 des Klemmenkastens 16 ist etwa gegenüberliegend zum Stecker 22 (in Fig. 4) eine kreisrunde Ausnehmung 28 vorgesehen, die zum Durchführen eines am Statorgehäuse 8 rückseitig, also auf der vom Pumpengehäuse 1 abgewandten Axialseite vorspringenden Erdungsstift 29 vorgesehen, der zum weiteren elektrischen Kontaktieren in den Klemmenkasten 16 ragt (in montiertem Zustand). Um auch demgegenüber eine Abdichtung zu gewährleisten, ist ein O-Ring 30 vorgesehen, der die Ausnehmung 28 umgibt und gegenüber einen zylindrischen Vorsprung am Statorgehäuse 8, an dessen Ende der Erdungsstift 29 angeordnet ist, abdichtet.

Das Klemmenkastengehäuse 15 ist als einstückiges Kunststoffspritzgussteil ausgebildet. Da das Statorgehäuse 8 in Bezug auf das Klemmenkastengehäuse 15 praktisch als starr anzusehen ist, muss zur Herstellung der Schnappverbindungen der jeweilige Schnappvorsprung 18 bzw. 20 unter Ausnutzung der Elastizität des Materials ausweichen. Hierzu ist eine Materialschwächung der Wandung des Klemmenkastengehäuses 15 vorgesehen. Soweit es die Schnappvorsprünge 18 angeht, ist eine solche Materialschwächung durch Schlitze 31 gegeben, die unmittelbar hinter dem Schnappvorsprung 18 angeordnet sind, sich über eine Breite erstrecken, die etwa der doppelten Breite des Schnappvorsprungs entspricht und wenige Millimeter breit ist. Diese Schlitze 31 sind jedoch nicht nur im Bereich der beiden Schnappvorsprünge 18 angeordnet sondern auch gegenüberliegend, so dass durch diese Schlitze auch eine gewisse Belüftung des Raumes zwischen Statorgehäuse 8 und dem Boden 21 des Klemmenkastens erfolgen kann.

Soweit es den Stecker 22 angeht, ist dieser durch Schlitze 32 in dem Bereich neben dem Schnappvorsprung 20 geschwächt. Diese Schlitze 32 erstrecken sich in Steckrichtung, so dass der Schnappvorsprung 22 am Ende einer durch die Schlitze gebildeten Zunge angeordnet ist, die quer zur Steckrichtung einfedern kann.

### Bezugszeichenliste

- 1: Pumpengehäuse
- 2: Saugkanal
- 3: Druckkanal
- 4: Pumpenlaufrad
- 5: Welle
- 6: Rotor
- 7: Stator
- 8: Statorgehäuse
- 9: Spaltrohr
- 10: Flansch des Motors
- 11: Flansch der Pumpe
- 12: Schrauben
- 13: Ringförmiger Flanschabschnitt
- 14: Stirnwand
- 15: Klemmenkastengehäuse
- 16: Klemmenkasten
- 17: Klemmenkastendeckel
- 18: Schnappvorsprünge, radial
- 19: Schnappausnehmungen, radial
- 20: Schnappvorsprung am Stecker
- 21: Klemmenkastenboden
- 22: Stecker
- 23: Ausnehmung
- 24: Muffe
- 25: Elektrische Kontakte
- 26: Dichtung
- 27: Muffe
- 28: Ausnehmung
- 29: Erdungsstift
- 30: O-Ring
- 31: Schlitze im Umfang
- 32: Schlitze im Stecker

## Patentansprüche

1. Heizungsumwälzpumpe mit einem Pumpengehäuse (1) mit mindestens einem darin angeordneten Pumpenlaufrad (4), das von einem Elektromotor (6, 7) angetrieben ist, dessen Statorgehäuse (8) ein Anschlusselement aufweist, das an das Pumpengehäuse (1) anschließt, und mit einem Klemmenkastengehäuse (15) für zumindest den elektrischen Anschluss des Motors (6, 7), welches an der vom Pumpengehäuse (1) abgewandten Axialseite des Statorgehäuses (8) angeordnet ist und welches das Statorgehäuse (8) bis in den Bereich des Anschlusselementes (10) übergreift, wobei der übergreifende Teil einstückig mit dem Klemmenkastengehäuse (15) ausgebildet ist, **dadurch gekennzeichnet, dass** das Klemmenkastengehäuse (15) kappenförmig und zum Statorgehäuse hin offen ausgebildet ist, dass das Klemmenkastengehäuse (15) mittels mindestens einer Schnappverbindung (18, 19) am Statorgehäuse (8) befestigt ist und dass die Schnappverbindung mindestens einen Schnappvorsprung (18) und eine entsprechend dazu angeordnete Schnappausnehmung (19) im Bereich zwischen der Umfangsfläche des Statorgehäuses (8) und dem übergreifenden Teil des Klemmenkastengehäuses (15) aufweist.

2. Heizungsumwälzpumpe nach Anspruch 1, **dadurch gekennzeichnet, dass** das Anschlusselement durch einen Flansch (10) gebildet ist.

3. Heizungsumwälzpumpe nach Anspruch 2, **dadurch gekennzeichnet, dass** das Klemmenkastengehäuse (15) das Statorgehäuse (8) bis zum Flansch (10) übergreift.

4. Heizungsumwälzpumpe nach Anspruch 2, **dadurch gekennzeichnet, dass** das Klemmenkastengehäuse das Statorgehäuse und den Flansch übergreift.

5. Heizungsumwälzpumpe nach einem der vorhergehenden Ansprüche, **dadurch gekennzeichnet, dass** die Pumpe von einem Nasslaufmotor (6, 7, 9) angetrieben ist und dass das Klemmenkastengehäuse (15) einen Klemmenkasten (16) mit dicht geschlossenen, vorzugsweise vom Statorgehäuse (8) axial beabstandeten, Boden (21) bildet.

6. Heizungsumwälzpumpe nach einem der vorhergehenden Ansprüche, **dadurch gekennzeichnet, dass** das Klemmenkastengehäuse (15) an seiner vom Statorgehäuse (8) abgewandten Seite mittels eines Deckels (17) dichtend abgeschlossen ist.

7. Heizungsumwälzpumpe nach einem der vorhergehenden Ansprüche, **dadurch gekennzeichnet, dass** die Schnappverbindung mindestens einen Schnappvorsprung (20) und eine entsprechend dazu angeordnete Schnappausnehmung im Bereich zwischen dem Boden (21) des Klemmenkastens (16) und der Axialseite des Statorgehäuses (8) aufweist.

8. Heizungsumwälzpumpe nach einem der vorhergehenden Ansprüche, **dadurch gekennzeichnet, dass** die Schnappverbindung mindestens einen, vorzugsweise zwei oder mehr am Flansch angreifende Schnappvorsprünge am Klemmenkastengehäuse aufweist.

9. Heizungsumwälzpumpe nach einem der vorhergehenden Ansprüche, **dadurch gekennzeichnet, dass** das Klemmenkastengehäuse (15) in seinem das Statorgehäuse (8) übergreifenden Bereich an der Innenseite mindestens einen Schnappvorsprung (18) und eine Materialschwächung, vorzugsweise in Form einer schlitzförmigen Ausnehmung (31) aufweist.

10. Heizungsumwälzpumpe nach einem der vorhergehenden Ansprüche, **dadurch gekennzeichnet, dass** durch den Boden des Klemmenkastens (16) elektrische Kontakte (25) hindurchgeführt sind, wobei die Kontaktdurchführung nach Art eines Steckers (22) einer elektrischen Steckverbindung ausgebildet ist, wobei im Statorgehäuse (8) eine Muffe (24) der Steckverbindung ausgebildet ist.

11. Heizungsumwälzpumpe nach Anspruch 10, **dadurch gekennzeichnet, dass** am Stecker (22) ein Schnappvorsprung (20) vorgesehen ist, der in eine Schnappausnehmung in der axialen Stirnwand (14) des Statorgehäuses (8) eingreift, die Teil der Muffe (24) bildet.

12. Heizungsumwälzpumpe nach einem der vorhergehenden Ansprüche, **dadurch gekennzeichnet, dass** das Klemmenkastengehäuse (15) als Kunststoffspritzgussteil und in dem das Statorgehäuse (8) übergreifenden Bereich zur Pumpe hin aufweitend ausgebildet ist.

13. Heizungsumwälzpumpe nach einem der vorhergehenden Ansprüche, **dadurch gekennzeichnet, dass** das Klemmenkastengehäuse das Statorgehäuse und den Flansch übergreift und dass fluchtend zu Ausnehmungen im Flansch Ausnehmungen im Klemmenkastengehäuse vorgesehen sind, durch welche die Bolzen geführt sind, welche den Flansch am Statorgehäuse mit dem Pumpengehäuse verbinden.

## Claims

1. A heating circulation pump with a pump housing (1) with at least one pump impeller (4) which is arranged therein and which is driven by an electric motor (6, 7) whose stator housing (8) comprises a connection element, in particular a flange (10), which connects to the pump housing (1), and with a terminal box housing (15) for at least the electric connection of the motor (6, 7), said terminal box housing being arranged on the axial side of the stator housing (8) which is away from the pump housing (1), and which engages over the stator housing (8) to into the region of the connection element (10), wherein the engaging-over part is designed as one piece with the terminal box housing (15) **characterised in that** the terminal box housing (15) is cap-shaped and is designed open towards the stator housing and that the terminal box housing (15) is fastened on the stator housing (8) by way of at least one snap connection (18, 19) and that the snap connection comprises at least one snap projection (18) and a snap recess (19) arranged corresponding to this, in the region between the peripheral surface of the stator housing (8) and the engaging-over part of the terminal box housing (15).

2. A heating circulation pump according to claim 1, **characterised in that** the connection element is educated by a flange (10).

3. A heating circulation pump according to claim 2, **characterised in that** the terminal box housing (15) engages over the stator housing (8) up to the flange (10).

4. A heating circulation pump according to claim 2, **characterised in that** the terminal box housing engages over the stator housing and the flange.

5. A heating circulation pump according to one of the preceding claims, **characterised in that** the pump is driven by a wet running motor (6, 7, 9) and that the terminal box housing (15) is a terminal box (16) with a sealingly closed base (21) which is preferably axially distanced to the stator housing (8).

6. A heating circulation pump according to one of the preceding claims, **characterised in that** the terminal box housing (15) at its side which is away from the stator housing (8) is sealingly closed by way of a cover (17).

7. A heating circulation pump according to one of the preceding claims, **characterised in that** the snap connection comprises at least one snap projection (20) and a snap recess which is arranged corresponding to this, in the region between the base (21) of the terminal box (16) and the axial side of the stator housing (8).

8. A heating circulation pump according to one of the preceding claims, **characterised in that** the snap connection comprises at least one, preferably two or more snap projections on the terminal box housing, which engage on the flange.

9. A heating circulation pump according to one of the preceding claims, **characterised in that** the terminal box housing (15) in its region which engages over the stator housing (8), on the inner side, comprises at least one snap connection (18) and a material weakening, preferably in the form of a slot-like recess (31).

10. A heating circulation pump according to one of the preceding claims, **characterised in that** electrical contacts (25) are led through the base of the terminal box (16), wherein the feeding-through of the contacts is designed in the manner of a plug (22) of an electrical plug connection, wherein a socket (24) of the plug connection is formed in the stator housing (8).

11. A heating circulation pump according to claim 10, **characterised in that** a snap projection (20) is formed on the plug (22) and which engages into a snap recess in the axial end-wall (14) of the stator housing (8) which forms part of the socket (24).

12. A heating circulation pump according to one of the preceding claims, **characterised in that** the terminal box housing (15) is designed as a plastic injection moulded part and in the region engaging over the stator housing (8) is designed widening towards the pump.

13. A heating circulation pump according to one of the preceding claims, **characterised in that** the terminal box housing engages over the stator housing and the flange and that recesses are provided in the terminal box housing in a manner flush with the recesses in the flange, through which recesses in the terminal box housing the bolts are led, which connect the flange on the stator housing to the pump housing.

## Revendications

1. Pompe de recirculation de chauffage avec un carter de pompe (1) avec au moins un rotor de pompe (4) disposé là-dedans qui est entraîné par un moteur électrique (6, 7) dont le carter de stator (8) comprend un élément de raccordement qui est adjacent au carter de pompe (1), et avec un carter de boîtier de connexion (15) pour au moins le raccordement électrique du moteur (6, 7) qui est disposé sur le côté axial du carter de stator (8) éloigné du carter de pompe (1) et qui recouvre le carter de stator (8) jusque dans la zone de l'élément de raccordement (10), la partie recouvrante étant formée en une seule pièce avec le carter de boîtier de connexion (15), **caractérisée en ce que** le carter de boîtier de connexion (15) présente la forme d'un capuchon et est ouvert vers le carter de stator, **en ce que** le carter de boîtier de connexion (15) est fixé au carter de stator (8) à l'aide d'au moins une connexion à encliquetage (18, 19) et **en ce que** la connexion à encliquetage comprend, dans la zone entre la surface de pourtour du carter de stator (8) et la partie recouvrante du carter de boîtier de connexion (15), au moins une protubérance d'encliquetage (18) et un évidement d'encliquetage (19) disposé de manière appropriée.

2. Pompe de recirculation de chauffage selon la revendication 1, **caractérisée en ce que** l'élément de raccordement est constitué par une bride (10).

3. Pompe de recirculation de chauffage selon la revendication 2, **caractérisée en ce que** le carter de boîtier de connexion (15) recouvre le carter de stator (8) jusqu'à la bride (10).

4. Pompe de recirculation de chauffage selon la revendication 2, **caractérisée en ce que** le carter de boîtier de connexion recouvre le carter de stator et la bride.

5. Pompe de recirculation de chauffage selon l'une des revendications précédentes, **caractérisée en ce que** la pompe est entraînée par un moteur pour fonctionnement en milieu humide (6, 7, 9) et **en ce que** le carter de boîtier de connexion (15) forme un boîtier de connexion (16) avec un fond (21) hermétique et, de préférence, axialement espacé du carter de stator (8).

6. Pompe de recirculation de chauffage selon l'une des revendications précédentes, **caractérisée en ce que** le carter de boîtier de connexion (15) est fermé hermétiquement, à l'aide d'un couvercle (17), sur le côté éloigné du carter de stator (8).

7. Pompe de recirculation de chauffage selon l'une des revendications précédentes, **caractérisée en ce que** la connexion à encliquetage comprend, dans la zone entre le fond (21) du boîtier de connexion (16) et le côté axial du carter de stator (8), au moins une protubérance d'encliquetage (20) et un évidement d'encliquetage disposé de manière appropriée.

8. Pompe de recirculation de chauffage selon l'une des revendications précédentes, **caractérisée en ce que** la connexion à encliquetage comprend au moins une, de préférence deux ou plus de protubérances d'encliquetage s'engageant au bride au carter de boîtier de connexion.

9. Pompe de recirculation de chauffage selon l'une des revendications précédentes, **caractérisée en ce que** le carter de boîtier de connexion (15) comprend, dans la zone recouvrant le carter de stator (8), sur sa face intérieure, au moins une protubérance d'encliquetage (18) et une zone de matière affaiblie, de préférence sous la forme d'un évidement (31) ayant la forme d'une fente.

10. Pompe de recirculation de chauffage selon l'une des revendications précédentes, **caractérisée en ce que** des contacts électriques (25) sont passés à travers le fond du boîtier de connexion (16), le passage de contacts étant configurés à la façon d'un connecteur (22) d'une connexion électrique à enfichage, une fiche femelle (24) de la connexion à enfichage étant formée dans le carter de stator (8).

11. Pompe de recirculation de chauffage selon la revendication 10, **caractérisée en ce qu'**il est prévu sur le connecteur (22), une protubérance d'encliquetage (20) qui s'engage dans un évidement d'encliquetage sur la paroi frontale axiale (14) du carter de stator (8), lequel évidement constitue une partie de la fiche femelle (24).

12. Pompe de recirculation de chauffage selon l'une des revendications précédentes, **caractérisée en ce que** le carter de boîtier de connexion (15) est réalisé comme pièce obtenue par injection de matière synthétique et s'élargit vers la pompe, dans la zone recouvrant le carter de stator (8).

13. Pompe de recirculation de chauffage selon l'une des revendications précédentes, **caractérisée en ce que** le carter de boîtier de connexion recouvre le carter de stator et la bride, et **en ce qu'**il est prévu, dans le carter de boîtier de connexion, des évidements alignés avec des évidements dans la bride, par lesquels sont passés des boulons qui rattachent la bride sur le carter de stator, au carter de pompe.
